(19) Europäisches Patentamt
European Patent Office
Office européen des brevets

(11) **EP 2 417 853 A1**

(12) **EUROPEAN PATENT APPLICATION**

(43) Date of publication:
**15.02.2012 Bulletin 2012/07**

(21) Application number: **10172052.2**

(22) Date of filing: **05.08.2010**

(51) Int Cl.:
*A01N 37/46* (2006.01)     *A01N 43/08* (2006.01)
*A01N 43/54* (2006.01)     *A01N 43/76* (2006.01)
*A01N 43/80* (2006.01)     *A01N 43/90* (2006.01)
*A01P 3/00* (2006.01)      *A01P 7/04* (2006.01)

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **BASF SE
67056 Ludwigshafen (DE)**

(72) Inventor: **The designation of the inventor has not
yet been filed**

(54) **Synergistic fungicidal and insecticidal mixtures comprising a fungicide and an insecticide**

(57)     The present invention relates to a mixture, comprising a nucleic acid synthesis inhibitor as defined in the description and at least one insecticidally active compound II selected from groups A) to J) as defined in the description in a synergistically effective amount, and to compositions comprising these mixtures.

EP 2 417 853 A1

**Description**

The present invention relates to mixtures comprising, as active components

1) at least one fungicidal compound I from the class of nucleic acid synthesis inhibitors selected from benalaxyl, bupirimate, furalaxyl, hymexazole, metalaxyl, metalaxyl-M (mefenoxam), octhilinone, ofurace, oxolinic acid and oxadixyl;
and
2) at least one pesticidal compound II selected from groups A) to J):

A) Voltage-dependent sodium channel blockers selected from metaflumizone and indoxacarb;
B) Uncoupling agent chlorfenapyr;
C) Quinazinalone insect behaviour modifier pyrifluquinazon;
D) Selective feeding blockers selected from pymetrozine and flonicamid;
E) sodium channel modulators selected from
bifenthrin, cypermethrin, alpha-cypermethrin, zeta-cypermethrin, deltamethrin, esfen-valerate, etofenprox, lambda-cyhalothrin, permethrin, tefluthrin, cyfluthrin, acrinathrin, allethrin, cycloprothrin, cyhalothrin, cyphenothrin, beta-cypermethrin, fenpropathrin, fenvalerate, flucythrinate, imiprothrin, prallethrin, pyrethrin I and 11, resmethrin, silafluofen, tau-fluvalinate, tetramethrin, tralomethrin, transfluthrin, profluthrin, dimefluthrin and gamma-cyhalothrin,
F) Insect growth regulators selected from
flufenoxuron, lufenuron, novaluron, buprofezin, teflubenzuron, methoxyfenozide, chlorfluazuron, cyramazin, diflubenzuron, flucycloxuron, hexaflumuron, triflumuron; diofenolan, hexythiazox, etoxazole, clofentezine, halofenozide, tebufenozide, azadirachtin, pyriproxyfen, methoprene, spirodiclofen, spiromesifen and spirotetramat;
G) Mitochondrial complex I electron transport inhibitors selected from fenazaquin, fenpyroximate, pyrimidifen, pyridaben, tebufenpyrad and tolfenpyrad;
H) Coupling site II electron transport inhibitor hydramethylnon;
J) Inhibitor of oxidative phosphorylation fenbutatin oxide

in synergistically effective amounts.

Moreover, the invention relates also to methods for controlling phytopathogenic harmful fungi, insects or other pests or for improving the health of the plants using mixtures of at least one compound I and at least one compound II and to the use of compounds I and compounds II for preparing such mixtures, and to compositions and plant propagation materials comprising these mixtures.

Practical agricultural experience has shown that the repeated and exclusive application of an individual active compound in the control of harmful fungi or insects or other pests leads in many cases to a rapid selection of those fungus strains or pest isolates which have developed natural or adapted resistance against the active compound in question. Effective control of these fungi or pests with the active compound in question is then no longer possible.

To reduce the risk of the selection of resistant fungus strains or insect isolates, mixtures of different active compounds are nowadays conventionally employed for controlling harmful fungi or insects or other pests. By combining active compounds having different mechanisms of action, it is possible to ensure successful control over a relatively long period of time.

It is an object of the present invention to provide, with a view to effective resistance management and effective control of phytopathogenic harmful fungi, insects or other pests, at application rates which are as low as possible, compositions which, at a reduced total amount of active compounds applied, have improved activity against the harmful fungi or pests (synergistic mixtures) and a broadened activity spectrum, in particular for certain indications.

We have accordingly found that this object is achieved by the compositions, defined herein, comprising compound I and at least one compound II.

Moreover, we have found that simultaneous, that is joint or separate, application of compound I and at least one compound II or successive application of a compound I and of a compound II allows better control of harmful fungi than is possible with the individual compounds alone (synergistic mixtures). Furthermore, synergistic effects in relation with the pesticidal (i.e. insecticidal) and/or herbicidal action has been found with the inventive mixtures.

Compound I and/or the compounds II of the inventive compositions can be present in different crystal modifications, which may differ in biological activity.

The compounds I, their preparation and their activity against harmful fungi is known (cf.: http://www.alanwood.net/pesticides/); these substances are commercially available and known, e.g. from the references: benalaxyl, methyl N-(phenylacetyl)-N-(2,6-xylyl)-DL-alaninate (DE 29 03 612); metalaxyl, methyl N-(methoxyacetyl)-N-(2,6-xylyl)-DL-alaninate (GB 15 00 581); ofurace, (RS)-α -(2-chloro-N-2,6-xylylacetamido)-γ -butyrolactone [CAS RN 58810-48-3]; oxadixyl; N-(2,6-dimethylphenyl)-2-methoxy-N-(2-oxo-3-oxazolidinyl)acetamide (GB 20 58 059).

Likewise, the compounds II, their preparation and their activity against insects and other pests is known (cf.: http://www.alanwood.net/pesticides/); these substances are commercially available and known.

Mixtures of the chloride channel activating insecticide abamectin with with certain fungicide inter alia metalaxyl are mentioned in US 2005/0209304 A1. Mixtures of the acetylcholinesterase inhibitor insecticide chlorpyrifos-methyl with metalaxyl are known from J. Appl. Sci. Res. 3(8), 723-732, 2007. Mixtures of spinosyn insecticide spinosad with certain fungicides inter alia metalaxyl are known from WO 00/035282. Mixtures of neonicotinoid insecitcdes with certain fungicides inter alia metalxyl and/or benalxyl are known from WO 06/69655, WO 06/23899, WO 96/03045 and WO 99/63826.

In the inventive mixtures, compound I is preferably selected from benalaxyl, metalaxyl, metalaxyl-M (mefenoxam) and oxadixyl, more preferably selected from metalaxyl and metalxyl-M, inparticular metalaxyl. Metalaxyl-M is th R-enantiomer of metalaxyl, also known as mefenoxam.

According to another embodiment of the invention, mixtures comprise as compound II a compound that is selected from alpha-cypermethrin, metaflumizone, indoxacarb, pymetrozine, flonicamid and pyrifluquinazone.

According to a further embodiment, mixtures comprise as compound II a compound that is selected from the group A), in particular metaflumizone.

According to a further embodiment, mixtures comprise as compound II chlorfenapyr.

According to a further embodiment, mixtures comprise as compound II pyrifluquinazon.

According to a further embodiment, mixtures comprise as compound II a compound of group D).

According to a further embodiment, mixtures comprise as compound II a compound of group E).

According to a further embodiment, mixtures comprise as compound II fenbutatin oxide.

According to another embodiment, in the inventive mixtures the compounds II are from the following list of antifungal biocontrol agents and plant bioactivators II-52 to II-55:

Bacillus pumilus (II-52) (e.g. NRRL Accession No. B-30087 in SONATA® and BALLAD® Plus from AgraQuest Inc., USA), Bacillus subtilis (II-53) (e.g. isolate NRRL-Nr. B-21661 in RHAPSODY®, SERENADE® MAX and SERENADE® ASO from AgraQuest Inc., USA), Bacillus subtilis var. amyloliquefaciens FZB24 (II-54) (e.g. TAEGRO® from Novozyme Biologicals, Inc., USA), and Ulocladium oudemansii HRU3 (II-55) (e.g. BOTRY-ZEN® from Botry-Zen Ltd, NZ).

Preferred compounds I are benalaxyl (I-1), bupirimate (I-2), furalaxyl (I-3), hymexazole (I-4), metalaxyl (I-5), metalaxyl-M (mefenoxam) (I-6), octhilinone (I-7), ofurace (I-8), oxolinic acid (I-9) and oxadixyl (I-10).

Table IIa: Preferred compounds II for use as component 2) (Co. 2) in inventive mixtures.

| No. | Co. 2 (compound II) | | No. | Co. 2 (compound II) |
|------|---------------------|---|-------|---------------------|
| II-1 | Alpha-cypermethrin | | II-7 | Deltamethrin |
| II-2 | Bifenthrin | | II-8 | Esfen-valerate |
| II-3 | Buprofezin | | II-9 | Etofenprox |
| II-4 | Chlorfenapyr | | II-10 | Fenbutatin oxide |
| II-5 | Chlorpyrifos | | II-11 | Flonicamid |
| II-6 | Cyfluthrin | | II-12 | Flufenoxuron |
| II-13 | Hydramethylnon | | II-21 | Permethrin |
| II-14 | Indoxacarb | | II-22 | Profenofos |
| II-15 | Lambda-cyhalothrin | | II-23 | Pymetrozine |
| II-16 | Lufenuron | | II-24 | Pyrifluquinazon |
| II-17 | Malathion | | II-25 | Tebufenpyrad |
| II-18 | Metaflumizone | | II-26 | Tefluthrin |
| II-19 | Methoxyfenozide | | II-27 | Zeta-cypermethrin |
| II-20 | Novaluron | | | |

Table IIb: Further compounds II for use as component 2) (Co. 2) in fungicidal and insecticidal mixtures.

| No. | Co. 2 (compound II) | | No. | Co. 2 (compound II) |
|---|---|---|---|---|
| II-28 | Abamectin | | II-35 | Methamidophos |
| II-29 | Acephate | | II-36 | Methomyl |
| II-30 | Aldicarb | | II-37 | Milbemectin |
| II-31 | Carbofuran | | II-38 | Spinetoram |
| II-32 | Carbosulfan | | II-39 | Spinosad |
| II-33 | Dimethoate | | II-40 | Terbufos |
| II-34 | Emamectin benzoate | | II-41 | Thiodicarb |

Particularly preferred are the following binary mixtures listed in Table A wherein compounds I are selected from compounds I-1 to I-10 and compounds II are selected from compounds II-1 to II-27 as defined above and listed:

Table A: Preferred binary Mixtures A-1 to A-280 comprising as active ingredients one compound I as defined and numbered above as component 1) (Co. 1) and one compound II as defined and numbered above as component 2) (Co. 2).

| Mixt. | Co. 1 | Co. 2 | | Mixt. | Co. 1 | Co. 2 | | Mixt. | Co. 1 | Co. 2 |
|---|---|---|---|---|---|---|---|---|---|---|
| A-1 | I-1 | II-1 | | A-15 | I-1 | II-14 | | A-29 | I-2 | II-1 |
| A-2 | I-1 | II-2 | | A-16 | I-1 | II-15 | | A-30 | I-2 | II-2 |
| A-3 | I-1 | II-2 | | A-17 | I-1 | II-16 | | A-31 | I-2 | II-2 |
| A-4 | I-1 | II-3 | | A-18 | I-1 | II-17 | | A-32 | I-2 | II-3 |
| A-5 | I-1 | II-4 | | A-19 | I-1 | II-18 | | A-33 | I-2 | II-4 |
| A-6 | I-1 | II-5 | | A-20 | I-1 | II-19 | | A-34 | I-2 | II-5 |
| A-7 | I-1 | II-6 | | A-21 | I-1 | II-20 | | A-35 | I-2 | II-6 |
| A-8 | I-1 | II-7 | | A-22 | I-1 | II-21 | | A-36 | I-2 | II-7 |
| A-9 | I-1 | II-8 | | A-23 | I-1 | II-22 | | A-37 | I-2 | II-8 |
| A-10 | I-1 | II-9 | | A-24 | I-1 | II-23 | | A-38 | I-2 | II-9 |
| A-11 | I-1 | II-10 | | A-25 | I-1 | II-24 | | A-39 | I-2 | II-10 |
| A-12 | I-1 | II-11 | | A-26 | I-1 | II-25 | | A-40 | I-2 | II-11 |
| A-13 | I-1 | II-12 | | A-27 | I-1 | II-26 | | A-41 | I-2 | II-12 |
| A-14 | I-1 | II-13 | | A-28 | I-1 | II-27 | | A-42 | I-2 | II-13 |
| A-43 | I-2 | II-14 | | A-83 | I-3 | II-26 | | A-123 | I-5 | II-10 |
| A-44 | I-2 | II-15 | | A-84 | I-3 | II-27 | | A-124 | I-5 | II-11 |
| A-45 | I-2 | II-16 | | A-85 | I-4 | II-1 | | A-125 | I-5 | II-12 |
| A-46 | I-2 | II-17 | | A-86 | I-4 | II-2 | | A-126 | I-5 | II-13 |
| A-47 | I-2 | II-18 | | A-87 | I-4 | II-2 | | A-127 | I-5 | II-14 |
| A-48 | I-2 | II-19 | | A-88 | I-4 | II-3 | | A-128 | I-5 | II-15 |
| A-49 | I-2 | II-20 | | A-89 | I-4 | II-4 | | A-129 | I-5 | II-16 |
| A-50 | I-2 | II-21 | | A-90 | I-4 | II-5 | | A-130 | I-5 | II-17 |
| A-51 | I-2 | II-22 | | A-91 | I-4 | II-6 | | A-131 | I-5 | II-18 |
| A-52 | I-2 | II-23 | | A-92 | I-4 | II-7 | | A-132 | I-5 | II-19 |

(continued)

| Mixt. | Co. 1 | Co. 2 | | Mixt. | Co. 1 | Co. 2 | | Mixt. | Co. 1 | Co. 2 |
|---|---|---|---|---|---|---|---|---|---|---|
| A-53 | I-2 | II-24 | | A-93 | I-4 | II-8 | | A-133 | I-5 | II-20 |
| A-54 | I-2 | II-25 | | A-94 | I-4 | II-9 | | A-134 | I-5 | II-21 |
| A-55 | I-2 | II-26 | | A-95 | I-4 | II-10 | | A-135 | I-5 | II-22 |
| A-56 | I-2 | II-27 | | A-96 | I-4 | II-11 | | A-136 | I-5 | II-23 |
| A-57 | I-3 | II-1 | | A-97 | I-4 | II-12 | | A-137 | I-5 | II-24 |
| A-58 | I-3 | II-2 | | A-98 | I-4 | II-13 | | A-138 | I-5 | II-25 |
| A-59 | I-3 | II-2 | | A-99 | I-4 | II-14 | | A-139 | I-5 | II-26 |
| A-60 | I-3 | II-3 | | A-100 | I-4 | II-15 | | A-140 | I-5 | II-27 |
| A-61 | I-3 | II-4 | | A-101 | I-4 | II-16 | | A-141 | I-6 | II-1 |
| A-62 | I-3 | II-5 | | A-102 | I-4 | II-17 | | A-142 | I-6 | II-2 |
| A-63 | I-3 | II-6 | | A-103 | I-4 | II-18 | | A-143 | I-6 | II-2 |
| A-64 | I-3 | II-7 | | A-104 | I-4 | II-19 | | A-144 | I-6 | II-3 |
| A-65 | I-3 | II-8 | | A-105 | I-4 | II-20 | | A-145 | I-6 | II-4 |
| A-66 | I-3 | II-9 | | A-106 | I-4 | II-21 | | A-146 | I-6 | II-5 |
| A-67 | I-3 | II-10 | | A-107 | I-4 | II-22 | | A-147 | I-6 | II-6 |
| A-68 | I-3 | II-11 | | A-108 | I-4 | II-23 | | A-148 | I-6 | II-7 |
| A-69 | I-3 | II-12 | | A-109 | I-4 | II-24 | | A-149 | I-6 | II-8 |
| A-70 | I-3 | II-13 | | A-110 | I-4 | II-25 | | A-150 | I-6 | II-9 |
| A-71 | I-3 | II-14 | | A-111 | I-4 | II-26 | | A-151 | I-6 | II-10 |
| A-72 | I-3 | II-15 | | A-112 | I-4 | II-27 | | A-152 | I-6 | II-11 |
| A-73 | I-3 | II-16 | | A-113 | I-5 | II-1 | | A-153 | I-6 | II-12 |
| A-74 | I-3 | II-17 | | A-114 | I-5 | II-2 | | A-154 | I-6 | II-13 |
| A-75 | I-3 | II-18 | | A-115 | I-5 | II-2 | | A-155 | I-6 | II-14 |
| A-76 | I-3 | II-19 | | A-116 | I-5 | II-3 | | A-156 | I-6 | II-15 |
| A-77 | I-3 | II-20 | | A-117 | I-5 | II-4 | | A-157 | I-6 | II-16 |
| A-78 | I-3 | II-21 | | A-118 | I-5 | II-5 | | A-158 | I-6 | II-17 |
| A-79 | I-3 | II-22 | | A-119 | I-5 | II-6 | | A-159 | I-6 | II-18 |
| A-80 | I-3 | II-23 | | A-120 | I-5 | II-7 | | A-160 | I-6 | II-19 |
| A-81 | I-3 | II-24 | | A-121 | I-5 | II-8 | | A-161 | I-6 | II-20 |
| A-82 | I-3 | II-25 | | A-122 | I-5 | II-9 | | A-162 | I-6 | II-21 |
| A-163 | I-6 | II-22 | | A-203 | I-8 | II-6 | | A-243 | I-9 | II-18 |
| A-164 | I-6 | II-23 | | A-204 | I-8 | II-7 | | A-244 | I-9 | II-19 |
| A-165 | I-6 | II-24 | | A-205 | I-8 | II-8 | | A-245 | I-9 | II-20 |
| A-166 | I-6 | II-25 | | A-206 | I-8 | II-9 | | A-246 | I-9 | II-21 |
| A-167 | I-6 | II-26 | | A-207 | I-8 | II-10 | | A-247 | I-9 | II-22 |
| A-168 | I-6 | II-27 | | A-208 | I-8 | II-11 | | A-248 | I-9 | II-23 |
| A-169 | I-7 | II-1 | | A-209 | I-8 | II-12 | | A-249 | I-9 | II-24 |
| A-170 | I-7 | II-2 | | A-210 | I-8 | II-13 | | A-250 | I-9 | II-25 |

(continued)

| Mixt. | Co. 1 | Co. 2 | | Mixt. | Co. 1 | Co. 2 | | Mixt. | Co. 1 | Co. 2 |
|-------|-------|-------|---|-------|-------|-------|---|-------|-------|-------|
| A-171 | I-7 | II-2 | | A-211 | I-8 | II-14 | | A-251 | I-9 | II-26 |
| A-172 | I-7 | II-3 | | A-212 | I-8 | II-15 | | A-252 | I-9 | II-27 |
| A-173 | I-7 | II-4 | | A-213 | I-8 | II-16 | | A-253 | I-10 | II-1 |
| A-174 | I-7 | II-5 | | A-214 | I-8 | II-17 | | A-254 | I-10 | II-2 |
| A-175 | I-7 | II-6 | | A-215 | I-8 | II-18 | | A-255 | I-10 | II-2 |
| A-176 | I-7 | II-7 | | A-216 | I-8 | II-19 | | A-256 | I-10 | II-3 |
| A-177 | I-7 | II-8 | | A-217 | I-8 | II-20 | | A-257 | I-10 | II-4 |
| A-178 | I-7 | II-9 | | A-218 | I-8 | II-21 | | A-258 | I-10 | II-5 |
| A-179 | I-7 | II-10 | | A-219 | I-8 | II-22 | | A-259 | I-10 | II-6 |
| A-180 | I-7 | II-11 | | A-220 | I-8 | II-23 | | A-260 | I-10 | II-7 |
| A-181 | I-7 | II-12 | | A-221 | I-8 | II-24 | | A-261 | I-10 | II-8 |
| A-182 | I-7 | II-13 | | A-222 | I-8 | II-25 | | A-262 | I-10 | II-9 |
| A-183 | I-7 | II-14 | | A-223 | I-8 | II-26 | | A-263 | I-10 | II-10 |
| A-184 | I-7 | II-15 | | A-224 | I-8 | II-27 | | A-264 | I-10 | II-11 |
| A-185 | I-7 | II-16 | | A-225 | I-9 | II-1 | | A-265 | I-10 | II-12 |
| A-186 | I-7 | II-17 | | A-226 | I-9 | II-2 | | A-266 | I-10 | II-13 |
| A-187 | I-7 | II-18 | | A-227 | I-9 | II-2 | | A-267 | I-10 | II-14 |
| A-188 | I-7 | II-19 | | A-228 | I-9 | II-3 | | A-268 | I-10 | II-15 |
| A-189 | I-7 | II-20 | | A-229 | I-9 | II-4 | | A-269 | I-10 | II-16 |
| A-190 | I-7 | II-21 | | A-230 | I-9 | II-5 | | A-270 | I-10 | II-17 |
| A-191 | I-7 | II-22 | | A-231 | I-9 | II-6 | | A-271 | I-10 | II-18 |
| A-192 | I-7 | II-23 | | A-232 | I-9 | II-7 | | A-272 | I-10 | II-19 |
| A-193 | I-7 | II-24 | | A-233 | I-9 | II-8 | | A-273 | I-10 | II-20 |
| A-194 | I-7 | II-25 | | A-234 | I-9 | II-9 | | A-274 | I-10 | II-21 |
| A-195 | I-7 | II-26 | | A-235 | I-9 | II-10 | | A-275 | I-10 | II-22 |
| A-196 | I-7 | II-27 | | A-236 | I-9 | II-11 | | A-276 | I-10 | II-23 |
| A-197 | I-8 | II-1 | | A-237 | I-9 | II-12 | | A-277 | I-10 | II-24 |
| A-198 | I-8 | II-2 | | A-238 | I-9 | II-13 | | A-278 | I-10 | II-25 |
| A-199 | I-8 | II-2 | | A-239 | I-9 | II-14 | | A-279 | I-10 | II-26 |
| A-200 | I-8 | II-3 | | A-240 | I-9 | II-15 | | A-280 | I-10 | II-27 |
| A-201 | I-8 | II-4 | | A-241 | I-9 | II-16 | | | | |
| A-202 | I-8 | II-5 | | A-242 | I-9 | II-17 | | | | |

Further binary mixtures listed in Table B are described wherein compounds I are selected from compounds I-1 to I-10 and compounds II are selected from compounds II-28 to II-41 as defined above and listed:

Table B: Binary Mixtures A-281 to A-420 comprising as active ingredients one compound I as defined and numbered above as component 1) (Co. 1) and one compound II as defined and numbered above as component 2) (Co. 2).

| Mixt. | Co.1 | Co. 2 | | Mixt. | Co. 1 | Co. 2 | | Mixt. | Co. 1 | Co. 2 |
|---|---|---|---|---|---|---|---|---|---|---|
| A-281 | I-1 | II-28 | | A-315 | I-3 | II-34 | | A-349 | I-5 | II-40 |
| A-282 | I-1 | II-29 | | A-316 | I-3 | II-35 | | A-350 | I-5 | II-41 |
| A-283 | I-1 | II-30 | | A-317 | I-3 | II-36 | | A-351 | I-6 | II-28 |
| A-284 | I-1 | II-31 | | A-318 | I-3 | II-37 | | A-352 | I-6 | II-29 |
| A-285 | I-1 | II-32 | | A-319 | I-3 | II-38 | | A-353 | I-6 | II-30 |
| A-286 | I-1 | II-33 | | A-320 | I-3 | II-39 | | A-354 | I-6 | II-31 |
| A-287 | I-1 | II-34 | | A-321 | I-3 | II-40 | | A-355 | I-6 | II-32 |
| A-288 | I-1 | II-35 | | A-322 | I-3 | II-41 | | A-356 | I-6 | II-33 |
| A-289 | I-1 | II-36 | | A-323 | I-4 | II-28 | | A-357 | I-6 | II-34 |
| A-290 | I-1 | II-37 | | A-324 | I-4 | II-29 | | A-358 | I-6 | II-35 |
| A-291 | I-1 | II-38 | | A-325 | I-4 | II-30 | | A-359 | I-6 | II-36 |
| A-292 | I-1 | II-39 | | A-326 | I-4 | II-31 | | A-360 | I-6 | II-37 |
| A-293 | I-1 | II-40 | | A-327 | I-4 | II-32 | | A-361 | I-6 | II-38 |
| A-294 | I-1 | II-41 | | A-328 | I-4 | II-33 | | A-362 | I-6 | II-39 |
| A-295 | I-2 | II-28 | | A-329 | I-4 | II-34 | | A-363 | I-6 | II-40 |
| A-296 | I-2 | II-29 | | A-330 | I-4 | II-35 | | A-364 | I-6 | II-41 |
| A-297 | I-2 | II-30 | | A-331 | I-4 | II-36 | | A-365 | I-7 | II-28 |
| A-298 | I-2 | II-31 | | A-332 | I-4 | II-37 | | A-366 | I-7 | II-29 |
| A-299 | I-2 | II-32 | | A-333 | I-4 | II-38 | | A-367 | I-7 | II-30 |
| A-300 | I-2 | II-33 | | A-334 | I-4 | II-39 | | A-368 | I-7 | II-31 |
| A-301 | I-2 | II-34 | | A-335 | I-4 | II-40 | | A-369 | I-7 | II-32 |
| A-302 | I-2 | II-35 | | A-336 | I-4 | II-41 | | A-370 | I-7 | II-33 |
| A-303 | I-2 | II-36 | | A-337 | I-5 | II-28 | | A-371 | I-7 | II-34 |
| A-304 | I-2 | II-37 | | A-338 | I-5 | II-29 | | A-372 | I-7 | II-35 |
| A-305 | I-2 | II-38 | | A-339 | I-5 | II-30 | | A-373 | I-7 | II-36 |
| A-306 | I-2 | II-39 | | A-340 | I-5 | II-31 | | A-374 | I-7 | II-37 |
| A-307 | I-2 | II-40 | | A-341 | I-5 | II-32 | | A-375 | I-7 | II-38 |
| A-308 | I-2 | II-41 | | A-342 | I-5 | II-33 | | A-376 | I-7 | II-39 |
| A-309 | I-3 | II-28 | | A-343 | I-5 | II-34 | | A-377 | I-7 | II-40 |
| A-310 | I-3 | II-29 | | A-344 | I-5 | II-35 | | A-378 | I-7 | II-41 |
| A-311 | I-3 | II-30 | | A-345 | I-5 | II-36 | | A-379 | I-8 | II-28 |
| A-312 | I-3 | II-31 | | A-346 | I-5 | II-37 | | A-380 | I-8 | II-29 |
| A-313 | I-3 | II-32 | | A-347 | I-5 | II-38 | | A-381 | I-8 | II-30 |
| A-314 | I-3 | II-33 | | A-348 | I-5 | II-39 | | A-382 | I-8 | II-31 |
| A-383 | I-8 | II-32 | | A-396 | I-9 | II-31 | | A-409 | I-10 | II-30 |
| A-384 | I-8 | II-33 | | A-397 | I-9 | II-32 | | A-41 0 | I-10 | II-31 |
| A-385 | I-8 | II-34 | | A-398 | I-9 | II-33 | | A-411 | I-10 | II-32 |

(continued)

| Mixt. | Co.1 | Co. 2 | | Mixt. | Co. 1 | Co. 2 | | Mixt. | Co. 1 | Co. 2 |
|-------|------|-------|--|-------|-------|-------|--|-------|-------|-------|
| A-386 | I-8 | II-35 | | A-399 | I-9 | II-34 | | A-412 | I-10 | II-33 |
| A-387 | I-8 | II-36 | | A-400 | I-9 | II-35 | | A-413 | I-10 | II-34 |
| A-388 | I-8 | II-37 | | A-401 | I-9 | II-36 | | A-414 | I-10 | II-35 |
| A-389 | I-8 | II-38 | | A-402 | I-9 | II-37 | | A-415 | I-10 | II-36 |
| A-390 | I-8 | II-39 | | A-403 | I-9 | II-38 | | A-416 | I-10 | II-37 |
| A-391 | I-8 | II-40 | | A-404 | I-9 | II-39 | | A-417 | I-10 | II-38 |
| A-392 | I-8 | II-41 | | A-405 | I-9 | II-40 | | A-418 | I-10 | II-39 |
| A-393 | I-9 | II-28 | | A-406 | I-9 | II-41 | | A-419 | I-10 | II-40 |
| A-394 | I-9 | II-29 | | A-407 | I-10 | II-28 | | A-420 | I-10 | II-41 |
| A-395 | I-9 | II-30 | | A-408 | I-10 | II-29 | | | | |

The mixtures and compositions thereof according to the invention can, in the use form as fungicides, also be present together with other active substances, e. g. with herbicides, insecticides, growth regulators, fungicides or else with fertilizers, as pre-mix or, if appropriate, not until immediately prior to use (tank mix).

The compounds I and the compositions according to the invention, respectively, are suitable as fungicides. They are distinguished by an outstanding effectiveness against a broad spectrum of phytopathogenic fungi, including soil-borne fungi, which derive especially from the classes of the Plasmodiophoromycetes, Peronosporomycetes (syn. Oomycetes), Chytridiomycetes, Zygomycetes, Ascomycetes, Basidiomycetes and Deuteromycetes (syn. Fungi imperfecti). Some are systemically effective and they can be used in crop protection as foliar fungicides, fungicides for seed dressing and soil fungicides. Moreover, they are suitable for controlling harmful fungi, which inter alia occur in wood or roots of plants.

The compounds I and the compositions according to the invention are particularly important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grape-fruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; natural rubber plants or ornamental and forestry plants, such as flowers, shrubs, broad-leaved trees or evergreens, e. g. conifers; and on the plant propagation material, such as seeds, and the crop material of these plants.

Preferably, compounds I and compositions thereof, respectively are used for controlling a multitude of fungi on field crops, such as potatoes sugar beets, tobacco, wheat, rye, barley, oats, rice, corn, cotton, soybeans, rape, legumes, sunflowers, coffee or sugar cane; fruits; vines; ornamentals; or vegetables, such as cucumbers, tomatoes, beans or squashes.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring.

Preferably, treatment of plant propagation materials with compounds I and compositions thereof, respectively, is used for controlling a multitude of fungi on cereals, such as wheat, rye, barley and oats; rice, corn, cotton and soybeans.

The term "cultivated plants" is to be understood as including plants which have been modified by breeding, mutagenesis or genetic engineering including but not limiting to agricultural biotech products on the market or in development (cf. http://www.bio.org/speeches/pubs/er/agri_products.asp). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant.

Such genetic modifications also include but are not limited to targeted post-translational modification of protein(s), oligo- or polypeptides e. g. by glycosylation or polymer additions such as prenylated, acetylated or farnesylated moieties or PEG moieties.

The compounds I and compositions thereof, respectively, are particularly suitable for controlling the following plant diseases:

Alternaria spp. (Alternaria leaf spot) on vegetables, rape (A. brassicola or brassicae), sugar beets (A. tenuis), fruits, rice, soybeans, potatoes (e. g. A. solani or A. alternata), tomatoes (e. g. A. solani or A. alternata) and wheat; Bipolaris and Drechslera spp. (teleomorph: Cochliobolus spp.), e. g. Southern leaf blight (D. maydis) or Northern leaf blight (B. zeicola) on corn, e. g. spot blotch (B. sorokiniana) on cereals and e.g. B. oryzae on rice and turfs; Blumeria (formerly Erysiphe) graminis (powdery mildew) on cereals (e. g. on wheat or barley); Botrytis cinerea (teleomorph: Botryotinia fuckeliana: grey mold) on fruits and berries (e. g. strawberries), vegetables (e. g. lettuce, carrots, celery and cabbages), rape, flowers, vines, forestry plants and wheat; Drechslera (syn. Helminthosporium, teleomorph: Pyrenophora) spp. on corn, cereals, such as barley (e. g. D. teres, net blotch) and wheat (e. g. D. tritici-repentis: tan spot), rice and turf; Esca (dieback, apoplexy) on vines; Erysiphe spp. (powdery mildew) on sugar beets (E. betae), vegetables (e. g. E. pisi), such as cucurbits (e. g. E. cichoracearum), cabbages, rape (e. g. E. cruciferarum); Fusarium (teleomorph: Gibberella) spp. (wilt, root or stem rot) on various plants, such as F. graminearum or F. culmorum (root rot, scab or head blight) on cereals (e. g. wheat or barley), F. oxysporum on tomatoes, F. solani on soybeans and F. verticillioides on corn; Gaeumannomyces graminis (take-all) on cereals (e. g. wheat or barley) and corn; Gibberella spp. on cereals (e. g. G. zeae) and rice (e. g. G. fujikuroi: Bakanae disease); Guignardia bidwellii (black rot) on vines; Microdochium (syn. Fusarium) nivale (pink snow mold) on cereals (e. g. wheat or barley); Monilinia spp., e. g. M. laxa, M. fructicola and M. fructigena (bloom and twig blight, brown rot) on stone fruits and other rosaceous plants; Mycosphaerella spp. on cereals, bananas, soft fruits and ground nuts, such as e. g. M. graminicola (anamorph: Septoria tritici, Septoria blotch) on wheat or M. fijiensis (black Sigatoka disease) on bananas; Peronospora spp. (downy mildew) on cabbage (e. g. P. brassicae), rape (e. g. P. parasitica), onions (e. g. P. destructor), tobacco (P. tabacina) and soybeans (e. g. P. manshurica); Phakopsora pachyrhizi and P. meibomiae (soybean rust) on soybeans; Phytophthora spp. (wilt, root, leaf, fruit and stem root) on various plants, such as paprika and cucurbits (e. g. P. capsici), soybeans (e. g. P. megasperma, syn. P. sojae), potatoes and tomatoes (e. g. P. infestans: late blight); Plasmopara spp., e. g. P. viticola (grapevine downy mildew) on vines; Puccinia spp. (rusts) on various plants, e. g. P. triticina (brown or leaf rust), P. striiformis (stripe or yellow rust), P. hordei (dwarf rust), P. graminis (stem or black rust) or P. recondita (brown or leaf rust) on cereals, such as e. g. wheat, barley or rye, and asparagus (e. g. P. asparagi); Pyrenophora (anamorph: Drechslera) tritici-repentis (tan spot) on wheat or P. teres (net blotch) on barley; Pyricularia spp., e. g. P. oryzae (teleomorph: Magnaporthe grisea, rice blast) on rice and P. grisea on turf and cereals; Pythium spp. (damping-off) on turf, rice, corn, wheat, cotton, rape, sunflowers, soybeans, sugar beets, vegetables and various other plants (e. g. P. ultimum or P. aphanidermatum); Rhizoctonia spp. on cotton, rice, potatoes, turf, corn, rape, potatoes, sugar beets, vegetables and various other plants, e. g. R. solani (root and stem rot) on soybeans, R. solani (sheath blight) on rice or R. cerealis (Rhizoctonia spring blight) on wheat or barley; Rhynchosporium secalis (scald) on barley, rye and triticale; Septoria spp. on various plants, e. g. S. glycines (brown spot) on soybeans, S. tritici (Septoria blotch) on wheat and S. (syn. Stagonospora) nodorum (Stagonospora blotch) on cereals; Uncinula (syn. Erysiphe) necator (powdery mildew, anamorph: Oidium tuckeri) on vines; Stagonospora spp. on cereals, e. g. S. nodorum (Stagonospora blotch, teleomorph: Leptosphaeria [syn. Phaeosphaeria] nodorum) on wheat; Venturia spp. (scab) on apples (e. g. V. inaequalis) and pears.

The compounds I and compositions thereof, respectively, are also suitable for controlling harmful fungi in the protection of stored products or harvest and in the protection of materials. The term "protection of materials" is to be understood to denote the protection of technical and non-living materials, such as adhesives, glues, wood, paper and paperboard, textiles, leather, paint dispersions, plastics, colling lubricants, fiber or fabrics, against the infestation and destruction by harmful microorganisms, such as fungi and bacteria.

The mixtures and compositions thereof, respectively, are also particularly suitable for controlling the following harmful insects from the order of the

lepidopterans (Lepidoptera), for example Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Diatraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusia ni and Zeiraphera canadensis,

beetles (Coleoptera), for example Agrilus sinuatus, Agriotes lineatus, Agriotes obscurus, Amphimallus solstitialis, Anisandrus dispar, Anthonomus grandis, Anthonomus pomorum, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Ceuthorrhynchus assimilis, Ceuthorrhynchus napi, Chaetocnema tibialis, Conoderus vespertinus, Crioceris asparagi, Diabrotica longicornis, Diabrotica speciosa, Diabrotica 12-punctata, Diabrotica virgifera, Diloboderus abderus, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Oryazophagus oryzae, Otiorrhynchus ovatus, Phaedon cochleariae, Phyllotreta chrysocephala, Phyllophaga sp., Phyllophaga cuyabana, Phyllophaga triticophaga, Phyllopertha horticola, Phyllotreta nemorum, Phyllotreta striolata, Popillia japonica, Sitona lineatus and Sitophilus granaria,

dipterans (Diptera), for example Aedes aegypti, Aedes vexans, Anastrepha ludens, Anopheles maculipennis, Ceratitis capitata, Chrysomya bezziana, Chrysomya hominivorax, Chrysomya macellaria, Contarinia sorghicola, Cordylobia anthropophaga, Culex pipiens, Dacus cucurbitae, Dacus oleae, Dasineura brassicae, Fannia canicularis, Gasterophilus intestinalis, Glossina morsitans, Haematobia irritans, Haplodiplosis equestris, Hylemyia platura, Hypoderma lineata, Liriomyza sativae, Liriomyza trifolii, Lucilia caprina, Lucilia cuprina, Lucilia sericata, Lycoria pectoralis, Mayetiola destructor, Musca domestica, Muscina stabulans, Oestrus ovis, Oscinella frit, Pegomya hysocyami, Phorbia antiqua, Phorbia brassicae, Phorbia coarctata, Rhagoletis cerasi, Rhagoletis pomonella, Tabanus bovinus, Tipula oleracea and Tipula paludosa, thrips (Thysanoptera), e.g. Frankliniella fusca, Frankliniella occidentalis, Frankliniella tritici, Scirtothrips citri, Thrips oryzae, Thrips palmi and Thrips tabaci, hymenopterans (Hymenoptera), e.g. Acromyrmex ambuguus, Acromyrmex crassispinus, Acromyrmex heiery, Acromyrmex landolti, Acromyrmex subterraneus, Athalia rosae, Atta capiguara, Atta cephalotes, Atta laevigata, Atta robusta, Atta sexdens, Atta texana, Hoplocampa minuta, Hoplocampa testudinea, Monomorium pharaonis, Solenopsis geminata and Solenopsis invicta,

heteropterans (Heteroptera), e.g. Acrosternum hilare, Blissus leucopterus, Cyrtopeltis notatus, Dichelops furcatus, Dysdercus cingulatus, Dysdercus intermedius, Euchistos heros, Eurygaster integriceps, Euschistus impictiventris, Leptoglossus phyllopus, Lygus lineolaris, Lygus pratensis, Nezara viridula, Piesma quadrata, Piezodorus guildini, Solubea insularis and Thyanta perditor,

Hemiptera and Homoptera, e.g. Acrosternum hilare, Blissus leucopterus, Cyrtopeltis notatus, Diaphorina citri, Dysdercus cingulatus, Dysdercus intermedius, Eurygaster integriceps, Euschistus impictiventris, Leptoglossus phyllopus, Lygus lineolaris, Lygus pratensis, Nezara viridula, Piesma quadrata, Solubea insularis , Thyanta perditor, Acyrthosiphon onobrychis, Adelges laricis, Aphidula nasturtii, Aphis fabae, Aphis forbesi, Aphis pomi, Aphis gossypii, Aphis grossulariae, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes persicae, Myzus ascalonicus, Myzus cerasi, Myzus varians, Nasonovia ribis-nigri, Nilaparvata lugens, Pemphigus bursarius, Perkinsiella saccharicida, Phorodon humuli, Psylla mali, Psylla piri, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, Viteus vitifolii, Cimex lectularius, Cimex hemipterus, Reduvius senilis, Triatoma spp., and Arilus critatus,

termites (Isoptera), e.g. Calotermes flavicollis, Cornitermes cumulans, Heterotermes tenuis, Leucotermes flavipes, Neocapritemes opacus, Procornitermes triacifer; Reticulitermes lucifugus, Syntermes molestus, and Termes natalensis,

orthopterans (Orthoptera), e.g. Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus and Tachycines asynamorus,

Arachnoidea, such as arachnids, e.g. of the families Argasidae, Ixodidae and Sarcoptidae, such as Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Dermanyssus gallinae, Psoroptes ovis, Rhipicephalus appendiculatus, Rhipicephalus evertsi, Sarcoptes scabiei, and Eriophyidae spp. such as Aculus schlechtendali, Phyllocoptrata oleivora and Eriophyes sheldoni; Tarsonemidae spp. such as Phytonemus pallidus and Polyphagotarsonemus latus; Tenuipalpidae spp. such as Brevipalpus phoenicis; Tetranychidae spp. such as Tetranychus cinnabarinus, Tetranychus kanzawai, Tetranychus pacificus, Tetranychus telarius and Tetranychus urticae, Panonychus ulmi, Panonychus citri, and oligonychus pratensis. In particular, the inventive mixtures are suitable for combating pests of the orders Coleoptera, Lepidoptera, Thysanoptera, Homoptera, Isoptera, and Orthoptera.

They are also suitable for controlling the following plant parasitic nematodes such as Meloidogyne, Globodera, Heterodera, Radopholus, Rotylenchulus, Pratylenchus and other genera.

The compounds I and compositions thereof, resepectively, may be used for improving the health of a plant. The invention also relates to a method for improving plant health by treating a plant, its propagation material and/or the locus where the plant is growing or is to grow with an effective amount of compounds I and compositions thereof, respectively.

The term "plant health" is to be understood to denote a condition of the plant and/or its products which is determined by several indicators alone or in combination with each other such as yield (e. g. increased biomass and/or increased content of valuable ingredients), plant vigor (e. g. improved plant growth and/or greener leaves (" greening effect" )), quality (e. g. improved content or composition of certain ingredients) and tolerance to abiotic and/or biotic stress.The above identified indicators for the health condition of a plant may be interdependent or may result from each other.

The compounds of formula I can be present in different crystal modifications whose biological activity may differ. They are likewise subject matter of the present invention.

The compounds I are employed as such or in form of compositions by treating the fungi or the plants, plant propagation materials, such as seeds, soil, surfaces, materials or rooms to be protected from fungal attack with a fungicidally effective amount of the active substances. The application can be carried out both before and after the infection of the plants, plant propagation materials, such as seeds, soil, surfaces, materials or rooms by the fungi.

The invention also relates to agrochemical compositions comprising a solvent or solid carrier and at least one compound I and to the use for controlling harmful fungi.

An agrochemical composition comprises a fungicidally effective amount of a compound I. The term "effective amount" denotes an amount of the composition or of the compounds I, which is sufficient for controlling harmful fungi on cultivated plants or in the protection of materials and which does not result in a substantial damage to the treated plants. Such an amount can vary in a broad range and is dependent on various factors, such as the fungal species to be controlled, the treated cultivated plant or material, the climatic conditions and the specific compound I used.

The compounds I, their N-oxides and salts can be converted into customary types of agrochemical compositions, e. g. solutions, emulsions, suspensions, dusts, powders, pastes and granules. The composition type depends on the particular intended purpose; in each case, it should ensure a fine and uniform distribution of the compound according to the invention.

Examples for composition types are suspensions (SC, OD, FS), emulsifiable concentrates (EC), emulsions (EW, EO, ES), pastes, pastilles, wettable powders or dusts (WP, SP, SS, WS, DP, DS) or granules (GR, FG, GG, MG), which can be water-soluble or wettable, as well as gel formulations for the treatment of plant propagation materials such as seeds (GF).

Usually the composition types (e. g. SC, OD, FS, EC, WG, SG, WP, SP, SS, WS, GF) are employed diluted. Composition types such as DP, DS, GR, FG, GG and MG are usually used undiluted.

The compositions are prepared in a known manner (cf. US 3,060,084, EP-A 707 445 (for liquid concentrates), Browning: " Agglomeration" , Chemical Engineering, Dec. 4, 1967, 147-48, Perry' s Chemical Engineer' s Handbook, 4th Ed., McGraw-Hill, New York, 1963, S. 8-57 und ff. WO 91/13546, US 4,172,714, US 4,144,050, US 3,920,442, US 5,180,587, US 5,232,701, US 5,208,030,

GB 2,095,558, US 3,299,566,Klingman: Weed Control as a Science (J. Wiley & Sons, New York, 1961), Hance et al.: Weed Control Handbook (8th Ed., Blackwell Scientific, Oxford, 1989) and Mollet, H. and Grubemann, A.: Formulation technology (Wiley VCH Verlag, Weinheim, 2001).

The agrochemical compositions may also comprise auxiliaries which are customary in agrochemical compositions. The auxiliaries used depend on the particular application form and active substance, respectively.

Examples for suitable auxiliaries are solvents, solid carriers, dispersants or emulsifiers (such as further solubilizers, protective colloids, surfactants and adhesion agents), organic and anorganic thickeners, bactericides, anti-freezing agents, anti-foaming agents, if appropriate colorants and tackifiers or binders (e. g. for seed treatment formulations).

Powders, materials for spreading and dusts can be prepared by mixing or concomitantly grinding the compounds I and, if appropriate, further active substances, with at least one solid carrier.

Granules, e. g. coated granules, impregnated granules and homogeneous granules, can be prepared by binding the active substances to solid carriers.

The agrochemical compositions generally comprise between 0.01 and 95%, preferably between 0.1 and 90%, most preferably between 0.5 and 90%, by weight of active substance. The active substances are employed in a purity of from 90% to 100%, preferably from 95% to 100% (according to NMR spectrum).

Water-soluble concentrates (LS), flowable concentrates (FS), powders for dry treatment (DS), water-dispersible powders for slurry treatment (WS), water-soluble powders (SS), emulsions (ES) emulsifiable concentrates (EC) and gels (GF) are usually employed for the purposes of treatment of plant propagation materials, particularly seeds. These compositions can be applied to plant propagation materials, particularly seeds, diluted or undiluted. The compositions in question give, after two-to-tenfold dilution, active substance concentrations of from 0.01 to 60% by weight, preferably from 0.1 to 40% by weight, in the ready-to-use preparations.

In a preferred embodiment, a suspension-type (FS) composition is used for seed treatment. Typcially, a FS composition may comprise 1-800 g/l of active substance, 1-200 g/l Surfactant, 0 to 200 g/l antifreezing agent, 0 to 400 g/l of binder, 0 to 200 g/l of a pigment and up to 1 liter of a solvent, preferably water.

Aqueous application forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active substance, wetter, tackifier, dispersant or emulsifier and, if appropriate, solvent or oil, and such concentrates are suitable for dilution with water.

The active substance concentrations in the ready-to-use preparations can be varied within relatively wide ranges. In general, they are from 0.0001 to 10%, preferably from 0.001 to 1 % by weight of active substance.

The active substances may also be used successfully in the ultra-low-volume process (ULV), it being possible to apply compositions comprising over 95% by weight of active substance, or even to apply the active substance without additives.

When employed in plant protection, the amounts of active substances applied are, depending on the kind of effect desired, from 0.001 to 2 kg per ha, preferably from 0.005 to 2 kg per ha, more preferably from 0.05 to 0.9 kg per ha, in particular from 0.1 to 0.75 kg per ha.

In treatment of plant propagation materials such as seeds, e. g. by dusting, coating or drenching seed, amounts of active substance of from 0.1 to 1000 g, preferably from 1 to 1000 g, more preferably from 1 to 100 g and most preferably from 5 to 100 g, per 100 kilogram of plant propagation material (preferably seed) are generally required.

When used in the protection of materials or stored products, the amount of active substance applied depends on the kind of application area and on the desired effect. Amounts customarily applied in the protection of materials are, e. g., 0.001 g to 2 kg, preferably 0.005 g to 1 kg, of active substance per cubic meter of treated material.

Various types of oils, wetters, adjuvants, herbicides, bactericides, other fungicides and/or pesticides may be added to the active substances or the compositions comprising them, if appropriate not until immediately prior to use (tank mix). These agents can be admixed with the compositions according to the invention in a weight ratio of 1:100 to 100:1, preferably 1:10 to 10:1.

According to this invention, applying the compounds I together with at least one compound II is to be understood to denote, that at least one compound I and at least one compound II occur simultaneously at the site of action (i.e. the harmful fungi, insects or other pests to be controlled or their habitats such as infected plants, plant propagation materials, particularly seeds, surfaces, materials or the soil as well as plants, plant propagation materials, particularly seeds, soil, surfaces, materials or rooms to be protected from fungal attack) in a fungicidally and/or insecticidally effective amount. This can be obtained by applying the compounds I and at least one compoundnd II simultaneously, either jointly (e. g. as tank-mix) or sperately, or in succession, wherein the time interval between the individual applications is selected to ensure that the active substance applied first still occurs at the site of action in a sufficient amount at the time of application of the further active substance(s). The order of application is not essential for working of the present invention.

In the binary mixtures, i.e. compositions according to the invention comprising one compound I (component 1) and one compound II (component 2), the weight ratio of component 1 and component 2 generally depends from the properties of the active substances used, generally it is in the range of from 1:500 to 500:1, usually it is in the range of from 1:100 to 100:1, regularly in the range of from 1:50 to 50:1, preferably in the range of from 1:20 to 20:1, more preferably in the range of from 1:10 to 10:1 and in particular in the range of from 1:3 to 3:1.

The compositions according to the invention can, in the use form as fungicides or insecticides, also be present together with further active substances (ternary mixtures), e. g. with herbicides, insecticides, growth regulators, fungicides or else with fertilizers, as pre-mix or, if appropriate, not until immediately prior to use (tank mix).

Mixing the binary mixtures according to the invention or the compositions comprising them in the use form as fungicides and/or insecticides with other fungicides, herbicides or insecticides results in many cases in an expansion of the fungicidal or insecticidal spectrum of activity being obtained or in a prevention of fungicide and/or insecticide resistance development. Furthermore, in many cases, synergistic effects are obtained.

The following list of active substances, in conjunction with which the binary mixtures according to the invention can be used, is intended to illustrate the possible combinations but does not limit them:

A) strobilurins

- azoxystrobin, coumethoxystrobin, coumoxystrobin, dimoxystrobin, enestroburin, fluoxastrobin, kresoxim-methyl, metominostrobin, orysastrobin, picoxystrobin, pyraclostrobin, pyrametostrobin, pyraoxystrobin, pyribencarb, trifloxystrobin, 2-[2-(2,5-dimethyl-phenoxymethyl)-phenyl]-3-methoxy-acrylic acid methyl ester and 2-(2-(3-(2,6-dichlorophenyl)-1-methyl-allylideneaminooxymethyl)-phenyl)-2-methoxyimino-N-methyl-acetamide;

B) carboxamides

- carboxanilides: benalaxyl, benalaxyl-M, benodanil, bixafen, boscalid, carboxin, fenfuram, fenhexamid, flutolanil, fluxapyroxad, furametpyr, isopyrazam, isotianil, kiralaxyl, mepronil, metalaxyl, metalaxyl-M (mefenoxam), ofurace, oxadixyl, oxycarboxin, penflufen, penthiopyrad, sedaxane, tecloftalam, thifluzamide, tiadinil, 2-amino-4-methyl-thiazole-5-carboxanilide, N-(4'-trifluoromethylthiobiphenyl-2-yl)-3-difluoromethyl-1-methyl-1 H-pyrazole-4-carboxamide and N-(2-(1,3,3-trimethylbutyl)-phenyl)-1,3-dimethyl-5-fluoro-1 H-pyrazole-4-carboxamide;
- carboxylic morpholides: dimethomorph, flumorph, pyrimorph;
- benzoic acid amides: flumetover, fluopicolide, fluopyram, zoxamide;
- other carboxamides: carpropamid, dicyclomet, mandiproamid, oxytetracyclin, silthiofarm and N-(6-methoxy-pyridin-3-yl) cyclopropanecarboxylic acid amide;

C) azoles

- triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole;
- imidazoles: cyazofamid, imazalil, pefurazoate, prochloraz, triflumizol;
- benzimidazoles: benomyl, carbendazim, fuberidazole, thiabendazole;
- others: ethaboxam, etridiazole, hymexazole and 2-(4-chloro-phenyl)-N-[4-(3,4-dimethoxy-phenyl)-isoxazol-5-yl]-2-prop-2-ynyloxy-acetamide;

D) heterocyclic compounds

- pyridines: fluazinam, pyrifenox, 3-[5-(4-chloro-phenyl)-2,3-dimethyl-isoxazolidin-3-yl]-pyridine, 3-[5-(4-methyl-phenyl)-2,3-dimethyl-isoxazolidin-3-yl]-pyridine;
- pyrimidines: bupirimate, cyprodinil, diflumetorim, fenarimol, ferimzone, mepanipyrim, nitrapyrin, nuarimol, pyrimethanil;
- piperazines: triforine;
- pyrroles: fenpiclonil, fludioxonil;
- morpholines: aldimorph, dodemorph, dodemorph-acetate, fenpropimorph, tridemorph;
- piperidines: fenpropidin;
- dicarboximides: fluoroimid, iprodione, procymidone, vinclozolin;
- non-aromatic 5-membered heterocycles: famoxadone, fenamidone, flutianil, octhilinone, probenazole, 5-amino-2-isopropyl-3-oxo-4-ortho-tolyl-2,3-dihydro-pyrazole-1-carbothioic acid S-allyl ester;
- others: acibenzolar-S-methyl, ametoctradin, amisulbrom, anilazin, blasticidin-S, captafol, captan, chinomethionat, dazomet, debacarb, diclomezine, difenzoquat, difenzoquat-methylsulfate, fenoxanil, Folpet, oxolinic acid, piperalin, proquinazid, pyroquilon, quinoxyfen, triazoxide, tricyclazole, 2-butoxy-6-iodo-3-propylchromen-4-one, 5-chloro-1-(4,6-dimethoxy-pyrimidin-2-yl)-2-methyl-1 H-benzoimidazole and 5-chloro-7-(4-methylpiperidin-1-yl)-6-(2,4,6-trifluorophenyl)-[1,2,4]triazolo-[1,5-a]pyrimidine;

E) carbamates

- thio- and dithiocarbamates: ferbam, mancozeb, maneb, metam, methasulphocarb, metiram, propineb, thiram, zineb, ziram;
- carbamates: benthiavalicarb, diethofencarb, iprovalicarb, propamocarb, propamocarb hydrochlorid, valifenalate and N-(1-(1-(4-cyano-phenyl)ethanesulfonyl)-but-2-yl) carbamic acid-(4-fluorophenyl) ester;

F) other active substances

- guanidines: guanidine, dodine, dodine free base, guazatine, guazatine-acetate, iminoctadine, iminoctadine-triacetate, iminoctadine-tris(albesilate);
- antibiotics: kasugamycin, kasugamycin hydrochloride-hydrate, streptomycin, polyoxine, validamycin A;
- nitrophenyl derivates: binapacryl, dinobuton, dinocap, nitrthal-isopropyl, tecnazen, organometal compounds: fentin salts, such as fentin-acetate, fentin chloride or fentin hydroxide;
- sulfur-containing heterocyclyl compounds: dithianon, isoprothiolane;
- organophosphorus compounds: edifenphos, fosetyl, fosetyl-aluminum, iprobenfos, phosphorous acid and its salts, pyrazophos, tolclofos-methyl;
- organochlorine compounds: chlorothalonil, dichlofluanid, dichlorophen, flusulfamide, hexachlorobenzene, pencycuron, pentachlorphenole and its salts, phthalide, quintozene, thiophanate-methyl, tolylfluanid, N-(4-chloro-2-nitro-phenyl)-N-ethyl-4-methylbenzenesulfonamide;
- inorganic active substances: Bordeaux mixture, copper acetate, copper hydroxide, copper oxychloride, basic copper sulfate, sulfur;
- antifungal biocontrol agents, plant bioactivators: Ampelomyces quisqualis (e.g. AQ 10® from Intrachem Bio GmbH & Co. KG, Germany), Aspergillus flavus (e.g. AFLA-GUARD® from Syngenta, CH), Aureobasidium pullulans (e.g. BOTECTOR® from bioferm GmbH, Germany), Bacillus pumilius (e.g. isolate NRRL-Nr. B-21661 in RHAPSODY®, SERENADE® MAX and SERENADE® ASO from Fa. AgraQuest Inc., USA), Bacillus subtilis var. amyloliquefaciens FZB24 (e.g. TAEGRO® from Novozyme Biologicals, Inc., USA), Candida oleophila I-82 (e.g. ASPIRE® from Ecogen Inc., USA), Candida saitoana (e.g. BIOCURE® (in mixture with lysozyme) and BIOCOAT® from Micro Flo Company, USA (BASF SE) and Arysta), Chitosan (e.g. ARMOUR-ZEN from BotriZen Ltd., NZ), Clonostachys rosea f. catenulata, also named Gliocladium catenulatum (e.g. isolate J1446: PRESTOP® from Verdera, Finland), Coniothyrium minitans (e.g. CONTANS® from Prophyta, Germany), Cryphonectria parasitica (e.g. Endothia parasitica from CNICM, France), Cryptococcus albidus (e.g. YIELD PLUS® from Anchor Bio-Technologies, South Africa), Fusarium oxysporum (e.g. BIOFOX® from S.I.A.P.A., Italy, FUSACLEAN® from Natural Plant Protection, France), Metschnikowia fructicola (e.g. SHEMER® from Agrogreen, Israel), Microdochium dimerum (e.g. ANTIBOT® from Agrauxine, France), Phlebiopsis gigantea (e.g. ROTSOP® from Verdera, Finland), Pseudozyma flocculosa (e.g. SPORODEX® from Plant Products Co. Ltd., Canada), Pythium oligandrum DV74 (e.g. POLYVERSUM® from Remeslo SSRO, Biopreparaty, Czech Rep.), Reynoutria sachlinensis (e.g. REGALIA® from Marrone BioInnovations, USA), Talaromyces flavus V117b (e.g. PRO-TUS® from Prophyta, Germany), Trichoderma asperellum SKT-1 (e.g. ECO-HOPE® from Kumiai Chemical Industry Co., Ltd., Japan), T. atroviride LC52 (e.g. SENTINEL® from Agrimm Technologies Ltd, NZ), T. harzianum T-22 (e.g. PLANTSHIELD® der Firma BioWorks Inc., USA), T. harzianum TH 35 (e.g. ROOT PRO® from Mycontrol Ltd., Israel), T. harzianum T-39 (e.g. TRICHODEX® and TRICHODERMA 2000® from Mycontrol Ltd., Israel and Makhteshim Ltd., Israel), T. harzianum and T. viride (e.g. TRICHOPEL from Agrimm Technologies Ltd, NZ), T. harzianum ICC012 and T. viride ICC080 (e.g. REMEDIER® WP from Isagro Ricerca, Italy), T. polysporum and T. harzianum (e.g. BINAB® from BINAB Bio-Innovation AB, Sweden), T. stromaticum (e.g. TRICOVAB® from C.E.P.L.A.C., Brazil), T. virens GL-21 (e.g. SOILGARD® from Certis LLC, USA), T. viride (e.g. TRIECO® from Ecosense Labs. (India) Pvt. Ltd., Indien, BIO-CURE® F from T. Stanes & Co. Ltd., Indien), T. viride TV1 (e.g. T. viride TV1 from Agribiotec srl, Italy), Ulocladium oudemansii HRU3 (e.g. BOTRY-ZEN® from Botry-Zen Ltd, NZ);
- others: biphenyl, bronopol, cyflufenamid, cymoxanil, diphenylamin, metrafenone, pyriofenone, mildiomycin, oxin-copper, prohexadione-calcium, spiroxamine, tebufloquin, tolylfluanid, N-(cyclopropylmethoxyimino-(6-difluoro-methoxy-2,3-difluorophenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, 2-{1-[2-(5-methyl-3-trifluoromethyl-pyrazole-1-yl)-acetyl]-piperidin-4-yl}-thiazole-4-carboxylic acid methyl-(1,2,3,4-tetrahydro-naphthalen-1-yl)-amide, 2-{1-[2-(5-methyl-3-trifluoromethyl-pyrazole-1-yl)-acetyl]-piperidin-4-yl}-thiazole-4-carboxylic acid methyl-(R)-1,2,3,4-tetrahydro-naphthalen-1-yl-amide, methoxy-acetic acid 6-tert-butyl-8-fluoro-2,3-dimethyl-quinolin-4-yl ester and N-Methyl-2-{1-[(5-methyl-3-trifluoromethyl-1H-pyrazol-1-yl)-acetyl]-piperidin-4-yl}-N-[(1R)-1,2,3,4-tetrahydro-naphthalen-1-yl]-4-thiazolecarboxamide.

G) growth regulators

abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid , trinexapac-ethyl and uniconazole;

H) herbicides

- acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
- amino acid derivatives: bilanafos, glyphosate, glufosinate, sulfosate;
- aryloxyphenoxypropionates: clodinafop, cyhalofop-butyl, fenoxaprop, fluazifop, haloxyfop, metamifop, propaquizafop, quizalofop, quizalofop-P-tefuryl;
- Bipyridyls: diquat, paraquat;
- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
- cyclohexanediones: butroxydim, clethodim, cycloxydim, profoxydim, sethoxydim, tepraloxydim, tralkoxydim;
- dinitroanilines: benfluralin, ethalfluralin, oryzalin, pendimethalin, prodiamine, trifluralin;
- diphenyl ethers: acifluorfen, aclonifen, bifenox, diclofop, ethoxyfen, fomesafen, lactofen, oxyfluorfen;
- hydroxybenzonitriles: bomoxynil, dichlobenil, ioxynil;
- imidazolinones: imazamethabenz, imazamox, imazapic, imazapyr, imazaquin, imazethapyr;
- phenoxy acetic acids: clomeprop, 2,4-dichlorophenoxyacetic acid (2,4-D), 2,4-DB, dichlorprop, MCPA, MCPA-thioethyl, MCPB, Mecoprop;
- pyrazines: chloridazon, flufenpyr-ethyl, fluthiacet, norflurazon, pyridate;
- pyridines: aminopyralid, clopyralid, diflufenican, dithiopyr, fluridone, fluroxypyr, picloram, picolinafen, thiazopyr;
- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, *triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea;
- triazines: ametryn, atrazine, cyanazine, dimethametryn, ethiozin, hexazinone, metamitron, metribuzin, prometryn, simazine, terbuthylazine, terbutryn, triaziflam;
- ureas: chlorotoluron, daimuron, diuron, fluometuron, isoproturon, linuron, methabenzthiazuron,tebuthiuron;
- other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
- others: amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidon-ethlyl, chlorthal, cinmethylin, clomazone, cumyluron, cyprosulfamide, dicamba, difenzoquat, diflufenzopyr, Drechslera monoceras, endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chlorophenyl)-5-fluoro-pyridine-2-carboxylic acid, 4-amino-3-chloro-6-(4-chloro-2-fluoro-3-methoxyphenyl)-pyridine-2-carboxylic acid methyl ester, and 4-amino-3-chloro-6-(4-chloro-3-dimethylamino-2-fluoro-phenyl)-pyridine-2-carboxylic acid methyl ester.

I) insecticides

- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;

- pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfen-valerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;
- insect growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;
- nicotinic receptor agonists/antagonists compounds: clothianidin, dinotefuran, imidacloprid, thiamethoxam, nitenpyram, acetamiprid, thiacloprid, 1-(2-chloro-thiazol-5-ylmethyl)-2-nitrimino-3,5-dimethyl-[1,3,5]triazinane;
- GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1 H-pyrazole-3-carbothioic acid amide;
- macrocyclic lactone insecticides: abamectin, emamectin, milbemectin, lepimectin, spinosad, spinetoram;
- mitochondrial electron transport inhibitor (METI) I acaricides: fenazaquin, pyridaben, tebufenpyrad, tolfenpyrad, flufenerim;
- METI II and III compounds: acequinocyl, fluacyprim, hydramethylnon;
- Uncouplers: chlorfenapyr;
- oxidative phosphorylation inhibitors: cyhexatin, diafenthiuron, fenbutatin oxide, propargite;
- moulting disruptor compounds: cryomazine;
- mixed function oxidase inhibitors: piperonyl butoxide;
- sodium channel blockers: indoxacarb, metaflumizone;
- others: benclothiaz, bifenazate, cartap, flonicamid, pyridalyl, pymetrozine, sulfur, thiocyclam, flubendiamide, chlorantraniliprole, cyazypyr (HGW86), cyenopyrafen, flupyrazofos, cyflumetofen, amidoflumet, imicyafos, bistrifluron, and pyrifluquinazon.

In ternary mixtures, i.e. compositions according to the invention comprising one compound I (component 1) and a first further active substance (component 2) and a second further active substance (component 3), e. g. two active substances from groups A) to I), the weight ratio of component 1 and component 2 depends from the properties of the active substances used, preferably it is in the range of from 1:50 to 50:1 and particularly in the range of from 1:10 to 10:1, and the weight ratio of component 1 and component 3 preferably is in the range of from 1:50 to 50:1 and particularly in the range of from 1:10 to 10:1.

The components can be used individually or already partially or completely mixed with one another to prepare the composition according to the invention. It is also possible for them to be packaged and used further as combination composition such as a kit of parts.

In one embodiment of the invention, the kits may include one or more, including all, components that may be used to prepare a subject agrochemical composition. E. g., kits may include one or more fungicide component(s) and/or an adjuvant component and/or a insecticide component and/or a growth regulator component and/or a herbicde. One or more of the components may already be combined together or pre-formulated. In those embodiments where more than two components are provided in a kit, the components may already be combined together and as such are packaged in a single container such as a vial, bottle, can, pouch, bag or canister. In other embodiments, two or more components of a kit may be packaged separately, i. e., not pre-formulated. As such, kits may include one or more separate containers such as vials, cans, bottles, pouches, bags or canisters, each container containing a separate component for an agrochemical composition. In both forms, a component of the kit may be applied separately from or together with the further components or as a component of a combination composition according to the invention for preparing the composition according to the invention.

The user applies the composition according to the invention usually from a predosage device, a knapsack sprayer, a spray tank or a spray plane. Here, the agrochemical composition is made up with water and/or buffer to the desired application concentration, it being possible, if appropriate, to add further auxiliaries, and the ready-to-use spray liquor or the agrochemical composition according to the invention is thus obtained. Usually, 50 to 500 liters of the ready-to-use spray liquor are applied per hectare of agricultural useful area, preferably 100 to 400 liters.

According to one embodiment, individual components of the composition according to the invention such as parts of a kit or parts of a binary or ternary mixture may be mixed by the user himself in a spray tank and further auxiliaries may be added, if appropriate (tank mix).

The fungicidal action of the mixtures according to the invention can be shown by the tests described below.

The active compounds I and compounds II, separately or jointly, are prepared as a stock solution comprising 25 mg of active compound which is made up to 10 ml using a mixture of acetone and/or DMSO and the emulsifier Uniperol® EL (wetting agent having an emulsifying and dispersing action based on ethoxylated alkylphenols) in a ratio by volume of solvent/emulsifier of 99:1. The mixture is then made up to 100 ml with water. This stock solution is diluted with the solvent/emulsifier/water mixture described to give the concentration of active compound stated below.

The visually determined percentages of infected leaf areas are converted into efficacies in % of the untreated control.

The efficacy (E) is calculated as follows using Abbot's formula:

$$E = (1 - \alpha/\bar{\beta}) \cdot 100$$

α  corresponds to the fungicidal infection of the treated plants in % and

β  corresponds to the fungicidal infection of the untreated (control) plants in %

An efficacy of 0 means that the infection level of the treated plants corresponds to that of the untreated control plants; an efficacy of 100 means that the treated plants were not infected.

The expected efficacies of active compound combinations were determined using Colby's formula (Colby, S.R. "Calculating synergistic and antagonistic responses of herbicide combinations", Weeds, 15, pp. 20-22, 1967) and compared with the observed efficacies.

Colby's formula: $\qquad$ $E = x + y - x \cdot y/100$

E  expected efficacy, expressed in % of the untreated control, when using the mixture of the active compounds A and B at the concentrations a and b

x  efficacy, expressed in % of the untreated control, when using the active compound A at the concentration a

y  efficacy, expressed in % of the untreated control, when using the active compound B at the concentration b.

**Claims**

1.  A mixture comprising, as active components,

    1) at least one fungicidal compound I from the class of nucleic acid synthesis inhibitors selected from benalaxyl, bupirimate, furalaxyl, hymexazole, metalaxyl, metalaxyl-M (mefenoxam), octhilinone, ofurace, oxolinic acid and oxadixyl;
    and
    2) at least one pesticidal compound II selected from groups A) to J):

        A) Voltage-dependent sodium channel blockers selected from metaflumizone and indoxacarb;
        B) Uncoupling agent chlorfenapyr;
        C) Quinazinalone insect behaviour modifier pyrifluquinazon;
        D) Selective feeding blockers selected from pymetrozine and flonicamid;
        E) sodium channel modulators selected from
        bifenthrin, cypermethrin, alpha-cypermethrin, zeta-cypermethrin, deltamethrin, esfen-valerate, etofenprox, lambda-cyhalothrin, permethrin, tefluthrin, cyfluthrin, acrinathrin, allethrin, cycloprothrin, cyhalothrin, cyphenothrin, beta-cypermethrin, fenpropathrin, fenvalerate, flucythrinate, imiprothrin, prallethrin, pyrethrin I and 11, resmethrin, silafluofen, tau-fluvalinate, tetramethrin, tralomethrin, transfluthrin, profluthrin, dimefluthrin and gamma-cyhalothrin,
        F) Insect growth regulators selected from
        flufenoxuron, lufenuron, novaluron, buprofezin, teflubenzuron, methoxyfenozide, chlorfluazuron, cyramazin, diflubenzuron, flucycloxuron, hexaflumuron, triflumuron; diofenolan, hexythiazox, etoxazole, clofentezine, halofenozide, tebufenozide, azadirachtin, pyriproxyfen, methoprene, spirodiclofen, spiromesifen and spirotetramat;
        G) Mitochondrial complex I electron transport inhibitors selected from fenazaquin, fenpyroximate, pyrimidifen, pyridaben, tebufenpyrad and tolfenpyrad;
        H) Coupling site II electron transport inhibitor hydramethylnon;

J) Inhibitor of oxidative phosphorylation fenbutatin oxide in synergistically effective amounts.

2. The mixture according to claim 1, wherein the compound I is selected from benalaxyl, metalaxyl, metalaxyl-M (mefenoxam) and oxadixyl.

3. The mixture according to claim 2, wherein the compound I is selected from metalaxyl and metalaxyl-M (mefenoxam).

4. The mixture according to claim 3, wherein the compound I is metalaxyl.

5. The mixture according to any of the claims 1 to 4, wherein the compound II is selected from alpha-cypermethrin, metaflumizone, indoxacarb, pymetrozine, flonicamid und pyrifluquinazone.

6. The mixture according to claim 5, wherein the compound II is metaflumizone.

7. The mixture according to any of the claims 1 to 6, comprising a compound I and a compound II in a weight ratio of from 100:1 to 1:100.

8. The mixture according to any of claims 1 to 7, comprising in addition to compound I and compound II at least one further active substance.

9. An agrochemical composition, comprising a solvent or solid carrier and a mixture according to any of claims 1 to 8.

10. A method for controlling phytopathogenic harmful fungi, comprising treating the fungi, their habitat or the seed, the soil or the plants to be protected against fungal attack with an effective amount a mixture as defined in any one of claims 1 to 8 or of the composition according to claim 9.

11. A method for improving the health of plants and/or increasing the yield, wherein the plant, the locus where the plant is growing or is expected to grow or plant propagation material from which the plant grows is treated with an effective amount of an effective amount of a mixture as defined in any one of claims 1 to 8 or of the composition according to claim 9.

12. A method for controlling pests, wherein the pest, their habitat, breeding grounds, their locus or the plants to be protected against pest attack, the soil or plant propagation material are treated with a effective amount of a mixture as defined in any one of claims 1 to 8 or of the composition according to claim 9.

13. A method according to the claims 10, 11 or 12, wherein the compounds as defined in any of claims 1 to 6 are applied simultaneously, that is jointly or separately, or in succession.

14. Plant propagation material, comprising the mixture as defined in any of claims 1 to 5 in an amount of from 1 g to 1000 g per 100 kg of plant propagation materials.

15. A process for preparing a composition according to claim 12, wherein compound I and at least one active compound II as defined in claim 1 are extended with solvents and/or solid carriers.

Europäisches
Patentamt

European
Patent Office

Office européen
des brevets

# EUROPEAN SEARCH REPORT

Application Number

EP 10 17 2052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2006/069655 A1 (BAYER CROPSCIENCE AG [DE]; KROHN PETER-WILHELM [DE]; BECKER ROLF CHRIS) 6 July 2006 (2006-07-06) * tables A2,B2 * ----- | 1,2,5-15 | INV. A01N37/46 A01N43/08 A01N43/54 A01N43/76 |
| A,D | WO 99/63826 A2 (BAYER AG [DE]; ERDELEN CHRISTOPH [DE]; ANDERSCH WOLFRAM [DE]; STENZEL) 16 December 1999 (1999-12-16) * table G3 * ----- | 1,2,5-15 | A01N43/80 A01N43/90 A01P3/00 A01P7/04 |
| X | WO 2007/031283 A2 (BASF AG [DE]; GEWEHR MARKUS [DE]; BURGERS JAN WILLEM [DE]; WILHELM RON) 22 March 2007 (2007-03-22) * the whole document * ----- | 1,2,5-15 | |
| E | WO 2010/092014 A2 (BASF SE [DE]; VOESTE DIRK [DE]; WILHELM RONALD [DE]) 19 August 2010 (2010-08-19) * claim 1; examples * ----- | 1,2,5-15 | |

TECHNICAL FIELDS
SEARCHED       (IPC)

A01N

~~The present search report has been drawn up for all claims~~

| Place of search | Date of completion of the search | Examiner |
|---|---|---|
| Munich | 15 March 2011 | Bertrand, Franck |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt
European
Patent Office
Office européen
des brevets

**Application Number**

EP 10 17 2052

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1, 2, 5-15(all partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 10 17 2052

The Search Division considers that the present European patent application does not comply with the requirements of unity of invention and relates to several inventions or groups of inventions, namely:

1. claims: 1, 2, 5-15(all partially)

   A mixture comprising synergistically effective amounts of at least one pesticidal compound II selected from groups A) to J) (see claim 1) and benalaxyl
   ---

2. claims: 1, 5-15(all partially)

   A mixture comprising synergistically effective amounts of at least one pesticidal compound II selected from groups A) to J) (see claim 1) and bupirimate
   ---

3. claims: 1, 5-15(all partially)

   A mixture comprising synergistically effective amounts of at least one pesticidal compound II selected from groups A) to J) (see claim 1) and furalaxyl
   ---

4. claims: 1, 5-15(all partially)

   A mixture comprising synergistically effective amounts of at least one pesticidal compound II selected from groups A) to J) (see claim 1) and hymexazole
   ---

5. claims: 4(completely); 1-3, 5-15(partially)

   A mixture comprising synergistically effective amounts of at least one pesticidal compound II selected from groups A) to J) (see claim 1) and metalaxyl
   ---

6. claims: 1-3, 5-15(all partially)

   A mixture comprising synergistically effective amounts of at least one pesticidal compound II selected from groups A) to J) (see claim 1) and mefenoxam
   ---

7. claims: 1, 5-15(all partially)

   A mixture comprising synergistically effective amounts of at least one pesticidal compound II selected from groups A) to J) (see claim 1) and octhilinone
   ---

8. claims: 1, 5-15(all partially)

Europäisches
Patentamt
European
Patent Office
Office européen
des brevets

**LACK OF UNITY OF INVENTION
SHEET B**

The Search Division considers that the present European patent application does not comply with the
requirements of unity of invention and relates to several inventions or groups of inventions, namely:

A mixture comprising synergistically effective amounts of at
least one pesticidal compound II selected from groups A) to
J) (see claim 1) and ofurace
---

9. claims: 1, 5-15(all partially)

A mixture comprising synergistically effective amounts of at
least one pesticidal compound II selected from groups A) to
J) (see claim 1) and oxolinic acid
---

10. claims: 1, 2, 5-15(all partially)

A mixture comprising synergistically effective amounts of at
least one pesticidal compound II selected from groups A) to
J) (see claim 1) and oxadixyl
---

## ANNEX TO THE EUROPEAN SEARCH REPORT
## ON EUROPEAN PATENT APPLICATION NO.

EP 10 17 2052

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2011

| Patent document cited in search report | | Publication date | Patent family member(s) | | Publication date |
|---|---|---|---|---|---|
| WO 2006069655 | A1 | 06-07-2006 | AR | 052179 A1 | 07-03-2007 |
| | | | AU | 2005321608 A1 | 06-07-2006 |
| | | | BR | PI0519384 A2 | 20-01-2009 |
| | | | CA | 2592093 A1 | 06-07-2006 |
| | | | CN | 101087526 A | 12-12-2007 |
| | | | DE | 102004062512 A1 | 06-07-2006 |
| | | | EP | 1830646 A1 | 12-09-2007 |
| | | | EP | 2266398 A2 | 29-12-2010 |
| | | | JP | 2008525339 T | 17-07-2008 |
| | | | KR | 20070089872 A | 03-09-2007 |
| | | | NZ | 556018 A | 29-10-2010 |
| | | | US | 2008261811 A1 | 23-10-2008 |
| | | | ZA | 200704662 A | 31-12-2008 |
| WO 9963826 | A2 | 16-12-1999 | AR | 054196 A2 | 06-06-2007 |
| | | | AT | 313953 T | 15-01-2006 |
| | | | AU | 766476 B2 | 16-10-2003 |
| | | | AU | 4503099 A | 30-12-1999 |
| | | | AU | 2003244551 A1 | 02-10-2003 |
| | | | AU | 2003273186 A1 | 19-02-2004 |
| | | | BR | 9911125 A | 20-02-2001 |
| | | | CA | 2334618 A1 | 16-12-1999 |
| | | | CN | 1307448 A | 08-08-2001 |
| | | | CN | 1566104 A | 19-01-2005 |
| | | | DK | 1085810 T3 | 15-05-2006 |
| | | | EP | 1085810 A2 | 28-03-2001 |
| | | | ES | 2252948 T3 | 16-05-2006 |
| | | | HK | 1038866 A1 | 08-07-2005 |
| | | | HU | 0102205 A2 | 28-10-2001 |
| | | | ID | 27072 A | 22-02-2001 |
| | | | JP | 2002517417 T | 18-06-2002 |
| | | | KR | 20010052358 A | 25-06-2001 |
| | | | MX | 229667 B | 04-08-2005 |
| | | | NO | 20006221 A | 16-01-2001 |
| | | | NZ | 508749 A | 28-06-2002 |
| | | | PL | 345196 A1 | 03-12-2001 |
| | | | TR | 200003651 T2 | 21-06-2001 |
| | | | TR | 200102836 T2 | 21-06-2002 |
| | | | TR | 200602857 T1 | 22-01-2007 |
| | | | TR | 200602858 T2 | 21-09-2006 |
| | | | US | 6436976 B1 | 20-08-2002 |
| WO 2007031283 | A2 | 22-03-2007 | AR | 056067 A1 | 19-09-2007 |
| | | | CA | 2621935 A1 | 22-03-2007 |
| | | | EA | 200800681 A1 | 30-10-2008 |
| | | | EP | 1926370 A2 | 04-06-2008 |

EPO FORM P0459

For more details about this annex : see Official Journal of the European Patent Office, No. 12/82

**EP 2 417 853 A1**

## ANNEX TO THE EUROPEAN SEARCH REPORT
## ON EUROPEAN PATENT APPLICATION NO.

EP 10 17 2052

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2011

| Patent document cited in search report | Publication date | Patent family member(s) | Publication date |
|---|---|---|---|
| WO 2007031283    A2 | | PE      06782007  A1<br>US    2008293707  A1<br>UY        29787  A1 | 03-08-2007<br>27-11-2008<br>30-04-2007 |
| WO 2010092014    A2 | 19-08-2010 | AR       075569  A1 | 20-04-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2903612
- GB 1500581 A
- GB 2058059 A
- US 20050209304 A1
- WO 00035282 A
- WO 0669655 A
- WO 0623899 A
- WO 9603045 A
- WO 9963826 A
- US 3060084 A

- EP 707445 A
- WO 9113546 A
- US 4172714 A
- US 4144050 A
- US 3920442 A
- US 5180587 A
- US 5232701 A
- US 5208030 A
- GB 2095558 A
- US 3299566 A


**Non-patent literature cited in the description**

- *J. Appl. Sci. Res.,* 2007, vol. 3 (8), 723-732
- **BROWNING.** Agglomeration. *Chemical Engineering,* 04 December 1967, 147-48
- Perry' s Chemical Engineer' s Handbook. Mc-Graw-Hill, 1963, 8-57ff
- Klingman: Weed Control as a Science. J. Wiley & Sons, 1961

- **HANCE et al.** Weed Control Handbook. Blackwell Scientific, 1989
- **MOLLET, H. ; GRUBEMANN, A.** Formulation technology. Wiley VCH Verlag, 2001
- Calculating synergistic and antagonistic responses of herbicide combinations. **COLBY, S.R.** Weeds. 1967, vol. 15, 20-22